Europäisches Patentamt

European Patent Office

Office européen des brevets

(11) Publication number: **0 195 969 B1**

(12) # EUROPEAN PATENT SPECIFICATION

(45) Date of publication of patent specification: **10.07.91** (51) Int. Cl.⁵: **C09D 9/00, C09D 9/04**

(21) Application number: **86103027.8**

(22) Date of filing: **07.03.86**

The file contains technical information submitted
after the application was filed and not included in
this specification

(54) **Process for the removal of paints.**

(30) Priority: **08.03.85 IT 1983685**
**27.05.85 IT 2091285**

(43) Date of publication of application:
**01.10.86 Bulletin 86/40**

(45) Publication of the grant of the patent:
**10.07.91 Bulletin 91/28**

(84) Designated Contracting States:
**BE DE FR GB IT NL**

(56) References cited:
**EP-A- 0 124 849**
**CH-A- 372 779**

(73) Proprietor: **MONTEDIPE S.r.l.**
**31, Foro Buonaparte**
**I-20121 Milan(IT)**

(72) Inventor: **Patron, Silvano**
**18/1, via Don Milani**
**I-30038 Spinea Venezia(IT)**
Inventor: **Musaragno, Giuseppe**
**123, via Torre Belfredo**
**I-30174 Mestre Venezia(IT)**

(74) Representative: **Barz, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**W-8000 München 40(DE)**

## Description

The walls of chemical apparatus and of their fittings are often coated with a corrosion-resistant paint, or thermosetting primer containing, for instance, an epoxy resin, an epoxy-phenolic resin, ebonite or ebonite-type elastomers. Owing to ageing and also to the strong corrosive action of the chemicals which come into contact with the walls, such coatings frequently exhibit blister formation and more or less localized wear and tear as well as a loosening and peeling-off of the organic film. The protection of the underlying walls against corrosion is thus considerably decreased and it is, therefore, necessary to remove the aged or damaged coating and replace it by a new one. Removal of the coating is often difficult, especially, when the coated wall is that of an apparatus or part thereof that is very small or very large.

One typical example are the pipes of tube-bundle heat-exchangers, which usually consist of carbon steel or alloy steel (especially when the process fluid is sea water or brackish water), coated by epoxy-phenolic resins, and have a very small diameter and a large length (9-10 meters or more). Another example are ebonized walls of chlor-alkali electrolytic cells.

In the past, the removal of paint was frequently carried out by burning the coating and then removing the charred residues by mechanical means (chipping, scraping, grinding etc.). This operation, however, does not always guarantee a perfect cleaning of the coated wall and results in the following shortcomings:

1) emission of bad-smelling fumes, which cause ecological problems and air pollution;
2) potential strain of the metallic plates, which could make these plates completely useless.

EP-A-124 849 relates to solvent-free agents for the removal of film-forming polymeric protective coatings. Said compositions have to contain certain alkanol amines and certain hydrotropic substances. Among others, they may also contain surfactants and corrosion inhibitors.

CH-A-372 779 describes paint removing compositions which contain 15 to 25% by weight of phenol, 50 to 70% by weight of methylene chloride and 1 to 10% by weight of formic acid as mandatory components.

Certain other chemical paint removers have also already been tested (especially removers based on toluene). This approach was, however, abandoned because of the flammability and toxicity of toluene and because of the poor results. This is particularly true when the objects to be treated are pipes with a very small diameter (1.25-2 cm) or heavily coated walls (thickness of the coating ≥ 5 mm).

It has now been found that these drawbacks can easily be overcome if a particular liquid paint remover is used which contains:

a) a halogenated solvent, preferably consisting of methylene chloride, and optionally or alternatively containing other halogenated solvents, for instance dichloro-ethane, perchloro-ethylene, trichloro-ethylene, 1,1,1-trichloro-ethane, dichloro-propane, 1,2,4-trichloro-benzene and o-dichloro-benzene;

b) an activator consisting of an organic acid, a glycol (or polyol) or an amine, optionally in admixture with water;

c) an anionic surfactant;

d) a corrosion inhibitor.

This paint remover, employed under well-defined operating conditions, removes said coatings in a surprisingly effective way.

In a specific embodiment the invention concerns a process for removing paint from the coated wall of a chemical apparatus and its fittings (piping included) by means of a liquid paint remover of the type described above, wherein:

a) said halogenated solvent (50-80% b.w. of the whole mixture) contains 80-96% b.w. of methylene chloride and 4-20% b.w. of trichloroethylene;

b) said activator (50-20% b.w. of the whole mixture) contains 20-35% b.w. of an organic acid, for instance acetic and/or formic acid, the rest being water;

c) said corrosion inhibitor (0.01-0.10% b.w. of the whole mixture) is a pyridine derivative and in particular 2-butyl-3,5-di-propyl-pyridine, 2-ethyl-2,5-dimethyl-pyridine or N-propyl-2-ethyl-3,5-dimethyl-pyridine acetate.

The paint remover used according to the invention can also contain the usual evaporation retardants, co-solvents (e.g. methanol), thickeners and surfactants of various kinds, which are different from the anionic surfactants herein-above.

After contact with this mixture the treated wall is washed with (preferably deionized) water - until it reaches a neutral pH-value - and then sand-blasted. The type of sand can vary, but in the case of small diameter pipes aluminium silicates give the best results.

The faulty coating can thus be removed within a very short time and at room temperature without having to dismantle the exchangers and without any etching of the underlying metal. Once the removal of the film has been achieved, the metallic surface can very easily receive a new protective coating which is completely uniform. The Al-silicate has a fluidity which is higher than that of silicic sand and, commonly used therefore, it does not cause any clogging during sand-blasting . Furthermore, because of its polyhedric shape, the Al-silicate endows the metal carrier with the proper degree of roughness for the new varnish to adhere to the metal.

According to a preferred embodiment, the amount of anionic surfactant is from 0.01 to 0.1% b.w. with respect to the whole paint removing composition; furthermore, the average size of the Al-silicate particles is preferably from 0.25 to 1.40 mm.

Once the damaged paint has been completely removed, the new (preferably catalytic) resin can be uniformly distributed by means of suitably designed spray-nozzles which usually deposit a coating of 70-80 $\mu$m at a time, the optimum thickness in general being 180-220$\mu$m, so as to withstand corrosion and to allow a proper heat exchange. If the new paint is applied in winter, it is advisable to inject hot air (about 60°C) into the inner portion of the tube-bundle.

After use, the liquid paint remover, if suitably treated by allowing it to settle and then filtering it or, optionally, adding fresh components, can be used again for further paint-removing operations.

A mild heating of the liquid can accelerate the release of the damaged coating, but great precaution should be taken to avoid air pollution.

The ebonite reported in the examples is derived from natural rubber, but satisfactory results were also obtained with other kinds of ebonite derived, for instance, from SBR rubber, nitrile rubber or from synthetic polyisoprene.

The examples illustrate the invention without however limiting it.

EXAMPLE 1

A paint removing composition was prepared containing:

| Component | % (b.w.) |
|---|---|
| methylene chloride | 66.4 |
| trichloroethylene | 3.5 |
| acetic acid | 9.0 |
| $H_2O$ | 21.0 |
| linear Na-dodecyl-benzene sulphonate | 0.05 |
| N-propyl-2-ethyl-3,5-dime-thyl-pyridine acetate | 0.05 |

This composition was poured into the 2100 carbon steel pipes of a heat exchanger having an inside diameter of 16 mm, a length of 9 m and having been coated (12 years ago) with a thermosetting epoxy-resin. After 14 hours the paint was completely removed. The inner walls of the pipes were then rinsed with deionized water, until a pH of 7 was obtained, and then sand-blasted with an Al-silicate (ASILIKOS®, manufactured by KRUPP-STEAG Co.) having an average particle size of 0.5 mm.

A new 220 $\mu$m coating of paint was then applied, consisting of a catalytic epoxy-varnish. The regenerated heat exchanger worked satisfactorily for 3 years, the cooling medium (flowing within the pipes) being sea-water.

EXAMPLE 2

4 test panels (specimen), consisting of carbon steel and coated with a 210$\mu$m layer of a thermosetting epoxy-phenolic resin, were soaked in the paint removing composition of example 1. After 12 hours the paint was completely removed.

EXAMPLE 3

Example 1 was repeated, replacing acetic acid by a 50:50 mixture (by moles) of acetic acid and formic acid. Better results were obtained.

EXAMPLE 4

The paint removing composition of example 1 was used as a paint removing bath for the outlet head of a chlor-alkali electrolytic cell made of carbon steel and internally coated, five years before the test, with an 8 mm layer of a graphitized ebonite. After approximately 120 hours the coating was completely removed from the metal. The metallic surface was then rinsed and sand-blasted as in example 1 (sand size = 0.45-1.20 mm). The head was finally coated with a fresh layer of the same kind of ebonite (thickness ranging from 5 to 8 mm) and the subsequent electrolysis proved to be satisfactory.

EXAMPLE 5

A 15.2 cm(6") T stub pipe (carbon steel), internally coated with a 5 mm layer of the ebonite used in example 4, was soaked in the bath of example 1. After 72 hours the coating was completely released. The stub pipe was then rinsed, sand-blasted and re-coated as in example 4 and the results were more than satisfactory.

**Claims**

1. A process for removing paint from a metallic substrate, wherein said substrate is brought into contact with a liquid composition containing at least:
    a) a halogenated solvent;
    b) an activator consisting of an organic acid, a glycol (or polyol) or an amine, optionally in admixture with water;
    c) an anionic surfactant;
    d) a corrosion inhibitor;
   and wherein the substrate is then rinsed with water and subsequently sand-blasted.

2. A process according to claim 1, wherein said paint contains an epoxy resin, an epoxy-phenolic resin, an ebonite or an ebonite-like elastomeric material and wherein said halogenated solvent is a mixture of methylene chloride and trichloroethylene.

3. A process according to claim 2, wherein:
    a) said halogenated solvent amounts to 50-80 % by weight of the total composition and consists of 80-96 % by weight of methylene chloride and 4-20 % by weight of trichloroethylene;
    b) said activator amounts to 50-20 % by weight of the total composition and consists of 20-35 % by weight of an organic acid, for instance acetic and/or formic acid, the rest being water;
    c) said corrosion inhibitor amounts to 0.01-0.10 % by weight of the total composition and is a pyridine derivative, in particular 2-butyl-3,5-di-propyl-pyridine, 2-ethyl-3,5-dimethyl-pyridine or N-propyl-2-ethyl-3,5-dimethyl-pyridine acetate.

4. A process according to anyone of claims 1-3, wherein the paint to be removed contains an epoxy or epoxy-phenolic resin and wherein the sand-blasting is carried out by means of an aluminium silicate having an average particle size of 0.25 to 1.40 mm.

5. A process according to anyone of claims 1-4, wherein said anionic surfactant is a linear alkali metal alkylbenzene sulphonate in an amount of preferably 0.01 to 0.10 % by weight, with respect to the total composition.

6. A process according to anyone of claims 1-5, wherein said corrosion inhibitor is N-propyl-2-ethyl-3,5-dimethyl-pyridine acetate.

7. A process according to anyone of claims 1-6, wherein the paint removing composition additionally contains an evaporation retardant and/or a co-solvent and/or a thickening agent.

**Revendications**

1. Un procédé d'élimination de peinture d'un substrat métallique, caractérisé en ledit que ce substrat est mis au contact d'une composition liquide contenant au moins:

4

a) un solvant halogéné;

b) un activateur constitué d'un acide organique, d'un glycol (ou polyol) ou d'une amine, éventuellement en mélange avec de l'eau;

c) un agent tensio-actif anionique;

d) un inhibiteur de corrosion;

et dans lequel le substrat est ensuite rincé à l'eau et ultérieurement soumis à un sablage.

2. Un procédé selon la revendication 1, caractérisé en ce que ladite peinture contient une résine époxy, une résine époxy phénolique, une ébonite ou un élastomère de type ébonite et dans lequel ledit solvant halogéné est un mélange de chlorure de méthylène et de trichloroéthylène.

3. Un procédé selon la revendication 2, caractérisé en ce que:

a) ledit solvant halogéné constitue de 50 à 80% en poids de la composition totale et il est constitué de 80 à 96% en poids de chlorure de méthylène et de 4 à 20% en poids de trichloroéthylène;

b) la quantité d'activateur est comprise entre 50 à 20% en poids de la composition totale et ledit activateur est constitué de 20 à 35% en poids d'un acide organique, par exemple acide acétique et/ou formique, le reste étant de l'eau;

c) la quantité d'inhibiteur de corrosion est comprise entre 0,01 à 0,10% en poids de la composition totale et il est constitué d'un dérivé de pyridine, en particulier 2-butyl-3,5-di-propyl-pyridine, 2-éthyl-3,5-diméthyl-pyridine ou acétate de N-propyl-2-éthyl-3,5-diméthyl-pyridine.

4. Un procédé selon l'une quelconque des revendications 1 à 3, caractérisé en ce que la peinture à éliminer comprend une résine époxy ou une résine époxy phénolique et en ce que le sablage est mis en oeuvre à l'aide d'un silicate d'aluminium dont la dimension particulaire moyenne est de l'ordre de 0,25 à 1,40 mm.

5. Un procédé selon l'une quelconque des revendications 1 à 4, caractérisé en ce que ledit agent tensio-actif anionique est un alkylbenzène sulfonate linéaire de métal alcalin en quantités de préférence comprises entre 0,01 et 0,10% en poids, par rapport à la composition totale.

6. Un procédé selon l'une quelconque des revendications 1 à 5, dans lequel ledit inhibiteur de corrosion est l'acétate de N-propyl-2-éthyl-3,5-diméthyl-pyridine.

7. Un procédé selon l'une quelconque des revendications 1 à 6, caractérisé en ce que la composition d'élimination de peinture comprend, en outre, un agent de retardement de l'évaporation et/ou un co-solvant et/ou un agent épaississant.

**Ansprüche**

1. Verfahren zum Entfernen von Farbe von einem metallischen Substrat, worin das Substrat in Kontakt mit einer flüssigen Zusammensetzung gebracht wird, die mindestens

a) ein halogeniertes Lösungsmittel;

b) einen Aktivator, bestehend aus einer organischen Säure, einem Glykol (oder Polyol) oder einem Amin, gegebenenfalls in Mischung mit Wasser;

c) ein anionisches Tensid;

d) einen Korrosionsinhibitor;

enthält, und worin das Substrat dann mit Wasser gespült und danach sandgestrahlt wird.

2. Verfahren nach Anspruch 1, worin die Farbe ein Epoxyharz, ein Epoxy-Phenolharz, einen Ebonit oder ein ebonitähnliches Elastomermaterial enthält, und worin das halogenierte Lösungsmittel eine Mischung aus Methylenchlorid und Trichlorethylen ist.

3. Verfahren nach Anspruch 2, worin:

a) das halogenierte Lösungsmittel 50-80 Gewichtsprozent der Gesamtzusammensetzung ausmacht und aus 80-96 Gewichtsprozent Methylenchlorid und 4-20 Gewichtsprozent Trichlorethylen besteht;

b) der Aktivator 50-20 Gewichtsprozent der Gesamtzusammensetzung ausmacht und aus 20-35 Gewichtsprozent einer organischen Säure, z.B. Essigsäure und/oder Ameisensäure, besteht und der Rest Wasser ist.

c) der Korrosionsinhibitor 0,01-0,10 Gewichtsprozent der Gesamtzusammensetzung ausmacht, und ein Pyridin-Derivat, insbesondere 2-Butyl-3,5-dipropylpyridin, 2-Ethyl-3,5-dimethylpyridin oder N-Propyl-2-ethyl-3,5-dimethylpyridinacetat darstellt.

4. Verfahren nach irgendeinem der Ansprüche 1-3, worin die zu entfernende Farbe ein Epoxyharz oder Epoxy-Phenolharz enthält, und worin das Sandstrahlen unter Verwendung eines Aluminiumsilicats mit einer durchschnittlichen Teilchengröße von 0,25 bis 1,40 mm durchgeführt wird.

5. Verfahren nach irgendeinem der Ansprüche 1-4, worin das anionische Tensid ein lineares Alkalimetall-Alkylbenzolsulfonat in einer Menge von vorzugsweise 0,01 bis 0,10 Gewichtsprozent, bezogen auf die Gesamtzusammensetzung, darstellt.

6. Verfahren nach irgendeinem der Ansprüche 1-5, worin der Korrosionsinhibitor N-Propyl-2-ethyl-3,5-dimethyl-pyridinacetat darstellt.

7. Verfahren nach irgendeinem der Ansprüche 1-6, worin die farbentfernende Zusammensetzung zusätzlich ein Mittel zur Verzögerung der Verdunstung und/oder ein Co-Lösungsmittel und/oder ein Verdikkungsmittel enthält.